# EUROPÄISCHE PATENTSCHRIFT

(11) **EP 1 069 009 B1**
(45) Veröffentlichungstag und Bekanntmachung des Hinweises auf die Patenterteilung: **29.12.2004**
(21) Anmeldenummer: 00113188.7
(22) Anmeldetag: 03.07.2000
(51) Int. Cl.: B60R 22/34, F16D 7/02

(54) **Gurtaufroller mit Reibungskupplung**
Seat belt retractor with friction coupling
Rétracteur de ceinture de sécurité avec accouplement par friction

(30) Priorität: 12.07.1999 DE 29912154 U
(43) Veröffentlichungstag der Anmeldung: 17.01.2001
(73) Patentinhaber: TRW Automotive GmbH, 73553 Alfdorf (DE)
(72) Erfinder: Strobel, Ralf, 73525 Schwäbisch Gmund (DE); Weller, Hermann-Karl, 73553 Alfdorf (DE)
(74) Vertreter: Sties, Jochen, Dipl.-Ing.

(56) Entgegenhaltungen:
- WO-A-97/27088
- DE-C- 916 370
- DE-U- 29 816 280
- GB-A- 2 175 358
- US-A- 2 779 175

## Beschreibung

Die Erfindung betrifft einen Gurtaufroller nach dem Oberbegriff des Anspruchs 1.

Bekannte Reibkupplungen weisen als Reibelement eine Metallscheibe auf, die zwischen zwei Kupplungsplatten angeordnet ist und beidseitig mit einem Kupplungsbelag versehen ist. Der Kupplungsbelag stellt einerseits eine hohe Reibkraft zu den Kupplungsplatten sicher und ist andererseits so ausgelegt, daß er den Druck- und Temperaturbelastungen im Betrieb gewachsen ist. Das Reibelement ist damit stets aus mehreren Teilen aus unterschiedlichem Material zusammengesetzt. Um den erforderlichen Anpreßdruck und damit eine ausreichende Reibkraft sicherzustellen, werden die Kupplungsplatten und das Reibelement mit Hilfe einer separaten Feder zusammengedrückt.

In der DE 916 370 C ist eine Überlastungskupplung beschrieben, deren Reibelement von einem gewellten Stahlband gebildet ist. Die US-A-2 779 175 zeigt eine Rutschkupplung mit einer flachen Friktionsscheibe, an der Vorsprünge ausgebildet sind.

Bei bekannten Gurtauttollem wird eine Gurtkraftbegrenzung dadurch erreicht, dass im Kraftflußweg zwischen der Gurtspule und der Sperrscheibe ein Torsionsstab angeordnet ist, der sich bei Überschreitung eines vorbestimmten Drehmoments verdreht und dabei plastisch verformt. Eine kontrollierte Drehmomentbegrenzung ist hierbei nur einmal und in einer Richtung möglich.

Die gattungsgemäße DE 298 16 280 U1 zeigt einen solchen Gurtaufroller, bei dem zusätzlich ein Stahlband unter Verformung aus einem Kanal gezogen wird, um ein mit fortschreitendem Drehwinkel abnehmendes Widerstandsmoment zu erreichen.

Aufgabe der Erfindung ist es, einen Gurtaufroller mit Drehmomentbegrenzung zu schaffen, die in zwei Richtungen kraftbegrenzend arbeitet und dabei einfach aufgebaut und kostengünstig herstellbar ist.

Gemäß der Erfindung wird dies erreicht durch einen Gurtaufroller mit den Merkmalen des kennzeichnenden Teils von Anspruch 1. Ein solcher Gurtaufroller ist besonders einfach und kostengünstig herstellbar, da die erforderliche Anpresskraft zwischen Reibelement und Kupplungsflächen von dem Reibelement selbst aufgebracht wird, da dieses als Federbauteil ausgeführt ist. Eine separate Anpreßfeder kann damit entfallen. Das Reibelement kann beispielsweise in einfacher Weise als Blechprägeelement mit geringen Kosten hergestellt werden. Das durch die Reibkupplung übertragbare Drehmoment ist wesentlich durch die Federkraft des Federbauteils mitbestimmt. Ein solcher Gurtaufroller wirkt in zwei Richtungen kraftbegrenzend, da die Reibkupplung das Drehmoment in zwei Richtungen begrenzt. Damit können Spitzenwerte der Gurtkraft sowohl beim fahrzeug- oder gurtbandsensitiven Blockieren der Gurtspule als auch beim Einsetzen eines über die Reibungskupplung an der Gurtspule angreifenden Gurtstraffers vermieden werden. Im Gegensatz zu konventionellen Gurtaufrollern mit Torsionsstäben als Drehmomentbegrenzungselement kann der erfindungsgemäße Gurtaufroller auch nach einer erfolgten Drehmomentbegrenzung wiederverwendet werden. Die Anordnung der Kupplungsflächen an Kupplungsplatten ermöglicht eine platzsparende Ausführung des Gurtaufrollers, da die Reibkupplung flach ausgeführt ist und sich in radialer Richtung erstreckt. Die Reibkupplung kann beispielsweise außerhalb des Rahmens des Gurtaufrollers auf der Gurtspulenachse angeordnet werden.

Weitere Ausführungsformen sind aus den abhängigen Ansprüchen bekannt.

In Weiterbildung der Erfindung weisen die Ausformungen in einer Richtung parallel zu den Kupplungsflächen einen kreisabschnittsförmigen Querschnitt auf. Mit einem kreisabschnittsförmigen Querschnitt werden gute Federeigenschaften Mit einem kreisabschnittsförmigen Querschnitt werden gute Federeigenschaften erreicht. In tangentialer Richtung zu dem kreisabschnittsförmigen Querschnitt der Ausformungen ist die übertragbare Reibkraft darüber hinaus richtungsunabhängig.

Vorteilhafterweise ist das Federbauteil als wellenförmiges Band ausgebildet. Ein solches wellenförmiges Band ist einfach aufgebaut und eignet sich zur Anordnung zwischen konzentrischen Kupplungsflächen. Sowohl die teilweise an der ersten Kupplungsfläche anliegenden Ausformungen als auch die teilweise an der zweiten Kupplungsfläche anliegenden Ausformungen des Federbauteils haben dann einen kreisabschnittsförmigen Querschnitt. Diese Maßnahmen erlauben es auch, daß das Reibelement aus einem einzigen Bauteil besteht.

Ebenfalls vorteilhaft ist es, wenn das Federbauteil als Zylinder mit federnden Ausformungen ausgebildet ist. Auch hier besteht das Reibelement aus einem einzigen Bauteil und ist zwischen zwei konzentrischen Kupplungsflächen besonders einfach montierbar, da der Zylinder eine gewisse Eigenstabilität aufweist und so leicht zwischen die Kupplungsflächen eingepreßt werden kann.

Bei einer weiteren vorteilhaften Ausbildung ist das Federbauteil als Platte mit federnden Ausformungen ausgebildet. Eine solche Ausführung erlaubt die Anordnung zwischen zwei Kupplungsplatten. Das Federbauteil besteht ebenfalls aus einem einzigen Bauteil und kann in besonders einfacher Weise als Blechprägeteil hergestellt werden.

Eine vorteilhafte Ausführung ergibt sich auch dadurch, daß die erste Kupplungsfläche auf einer mit der Gurtspule drehfest verbundenen Zylinderfläche und die zweite Kupplungsfläche auf einer drehfest mit der Sperrscheibe verbundenen Zylinderfläche vorgesehen ist und zwischen den Kupplungsflächen ein Zylinder mit federnden Ausformungen angeordnet ist. Bei einem solchen Gurtaufroller wird das Federbauteil gleichmäßig beansprucht, da zwischen den konzentrischen Kupplungsflächen überall die gleiche Relativgeschwindigkeit auftritt. In Weiterbildung der Erfindung ist schließlich vorgesehen, daß die erste Kupplungsfläche durch eine Mantelfläche einer Verlängerung einer mit der Gurtspule drehfest verbundenen Gurtspulenachse und die zweite Kupplungsfläche durch eine Innenfläche eines drehfest mit der Sperrscheibe verbundenen Hohlzylinders gebildet ist. Ein solcher Gurtaufroller erfordert zur Realisierung der Reibkupplung nur einen geringen Bauaufwand, da lediglich die Änderung bereits vorhandener Bauteile, nämlich der Gurtspulenachse und der Sperrscheibe, sowie das Federbauteil erforderlich sind. Die Gurtspulenachse muß lediglich mit einer, sich beispielsweise außerhalb des Rahmens erstreckenden Verlängerung versehen werden, und an der Sperrscheibe muß ein zur Gurtspulenachse konzentrischer Hohlzylinder angebracht werden. Das Federbauteil wird dann auf die Verlängerung der Gurtspulenachse und in den Hohlzylinder der Sperrscheibe eingeschoben.

Weitere Merkmale und Vorteile der Erfindung ergeben sich aus der folgenden Beschreibung bevorzugter Ausführungsformen der Erfindung unter Bezugnahme auf die Zeichnung. In der Zeichnung zeigen:
Figur 1 eine schematische Darstellung zur Erläuterung des Funktionsprinzips der Reibkupplung des erfindungsgemäßen Gurtaufrollers;
Figur 2 eine perspektivische Darstellung einer Ausführungsform des Federbauteils für die Reibkupplung aus Figur 1;
Figur 3 eine teilweise geschnittene, perspektivische Ansicht einer ersten Ausführungsform des erfindungsgemäßen Gurtaufrollers;
Figur 4 eine teilweise geschnittene, perspektivische Detailansicht des Gurtaufrollers der Figur 3; und
Figur 5 eine teilweise geschnittene, perspektivische Ansicht einer zweiten Ausführungsform des erfindungsgemäßen Gurtaufrollers.

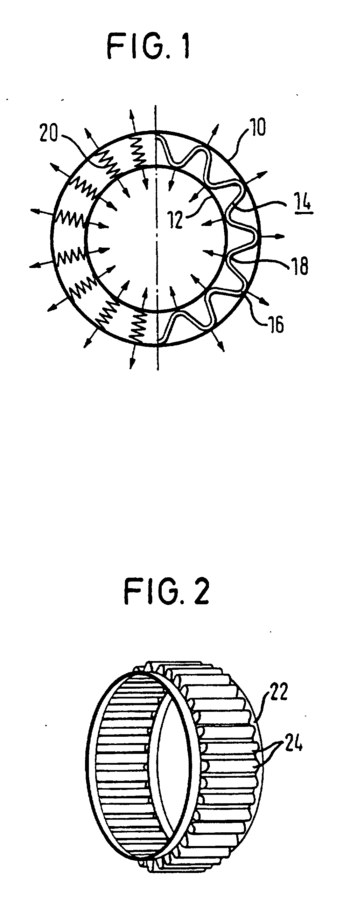

Die schematische Darstellung der Figur 1 zeigt zwei konzentrisch zueinander angeordnete Kupplungsflächen 10 und 12. Auf der rechten Seite der Figur 1 ist zwischen diesen Kupplungsflächen 10 und 12 ein bandförmiges Federbauteil 14 angeordnet. Das bandförmige Federbauteil 14 weist Ausformungen auf, die teilweise an der ersten Kupplungsfläche 10 anliegende erste Abschnitte 16 und teilweise an der zweiten Kupplungsfläche 12 anliegende zweite Abschnitte 18 bilden. Sowohl die ersten Abschnitte 16 als auch die zweiten Abschnitte 18 weisen in einer Richtung parallel zu den Kupplungsflächen 10 und 12 einen kreisabschnittsförmigen Querschnitt auf. Durch die kreisabschnittsförmigen Ausformungen des Federbauteils 14 nimmt dieses die Gestalt eines wellenförmigen Bandes an. Das Federbauteil 14 ist zwischen die Kupplungsflächen 10 und 12 eingepreßt, so daß durch die Federwirkung des Federbauteils 14 die ersten Abschnitte 16 eine Kraft auf die Kupplungsfläche 10 und die zweiten Abschnitte 18 eine Kraft auf die Kupplungsfläche 12 ausüben. Die auf die Kupplungsflächen 10 und 12 ausgeübten Kräfte sind in der Figur 1 durch Pfeile symbolisiert. Die Federwirkung des Federbauteils 14 zwischen den Kupplungsflächen 10 und 12 ist im linken Teil der Figur 1 durch Schraubenfedern 20 symbolisiert, die zwischen den Kupplungsflächen 10 und 12 angeordnet sind und auf diese eine Kraft ausüben. Jede Welle des Federbauteils 14 verhält sich wie eine Feder 20, deren Kraft im elastischen Bereich proportional zur Federkonstanten und zur Auslenkung der Feder ist. Die zwischen dem Federbauteil 14 und den Kupplungsflächen 10 bzw. 12 übertragbare Reibkraft ergibt sich aus der in der Figur 1 durch Pfeile angedeuteten Radialkraft, die senkrecht zu den Kupplungsflächen 10 bzw. 12 ist, und dem Reibungskoeffizienten zwischen dem Federbauteil 14 und der Kupplungsfläche 10 bzw. 12. Das durch die Reibkupplung insgesamt übertragbare Drehmoment folgt dann aus den radialen Abmessungen der Kupplung. Bei Überschreitung eines vorbestimmten Drehmoments erfolgt zwischen dem Federbauteil 14 und den Kupplungsflächen 10 bzw. 12 ein Übergang von Haftreibung zu Gleitreibung. Dadurch sinkt das übertragbare Drehmoment ab, und die Kraft in einem beispielsweise an die Kupplungsfläche 10 angeschlossenen Gurtband wird begrenzt. Die in der Figur 1 dargestellte Reibkupplung kann das übertragene Drehmoment dabei in zwei Richtungen, im Uhrzeigersinn und entgegen dem Uhrzeigersinn, begrenzen.

In der Figur 2 ist ein Federbauteil 22 dargestellt, das als Zylinder mit federnden Ausformungen 24 ausgebildet ist. Die Ausformungen 24 weisen eine längliche Form auf, und mehrere Ausformungen 24 sind mit ihrer jeweiligen Längsseite aneinander angrenzend um den Umfang des Zylinders 22 herum angeordnet. Der Zylinder 22 weist eine gewisse Eigenstabilität auf, so daß er leicht zwischen zwei konzentrische Kupplungsflächen eingepreßt werden kann.

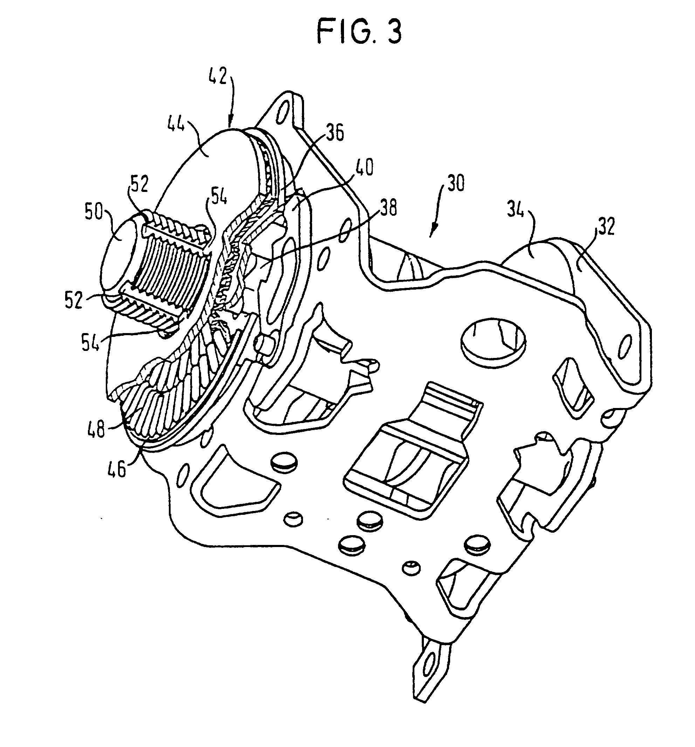

Figur 3 zeigt eine erste Ausführungsform eines erfindungsgemäßen Gurtaufrollers 30. Der Gurtaufroller 30 weist einen Rahmen 32, eine in dem Rahmen 32 gelagerte Gurtspule 34 und einen Blockiermechanismus für die Gurtspule 34 auf. Der Blockiermechanismus besteht aus einer Sperrscheibe 36 mit Sperrverzahnung 38. Zur Blockierung der Gurtspule 34 gegenüber dem Rahmen 32 kann eine Sperrklinke 40 durch einen konventionellen, fahrzeug- und gurtbandsensitiv wirkenden Ansteuermechanismus, der nicht dargestellt ist, in die Sperrverzahnung 38 eingesteuert werden. Zur Gurtkraftbegrenzung ist der Gurtaufroller 30 mit einer Reibkupplung 42 versehen, die im Kraftfluß zwischen der Gurtspule 34 und der Sperrscheibe 36 angeordnet ist. Die Reibkupplung 42 besteht aus der Sperrscheibe 36, einer Kupplungsplatte 44 und einem zwischen der Sperrscheibe 36 und der Kupplungsplatte 44 angeordneten Federplatte 46. Die Federplatte 46 ist als Blechprägeteil ausgeführt und weist federnde Ausformungen 48 auf, die kreisförmig in zwei Reihen um den Mittelpunkt der kreisförmigen Platte 46 angeordnet sind. Eine Gurtspulenachse 50 ist fest mit der Gurtspule 34 verbunden und erstreckt sich durch den Rahmen 32, die Sperrverzahnung 38, die Sperrscheibe 36, die Federplatte 46 und die Kupplungsplatte 44 hindurch. Während die Sperrscheibe 36 drehbar auf der Gurtspulenachse 50 gelagert ist, ist die Kupplungsplatte 44 drehfest aber längsverschieblich an der Gurtspulenachse 50 befestigt. Hierzu weist die Gurtspulenachse 50 mehrere Längsnuten 52 auf, in die Nasen 54 der Kupplungsplatte 44 eingreifen.

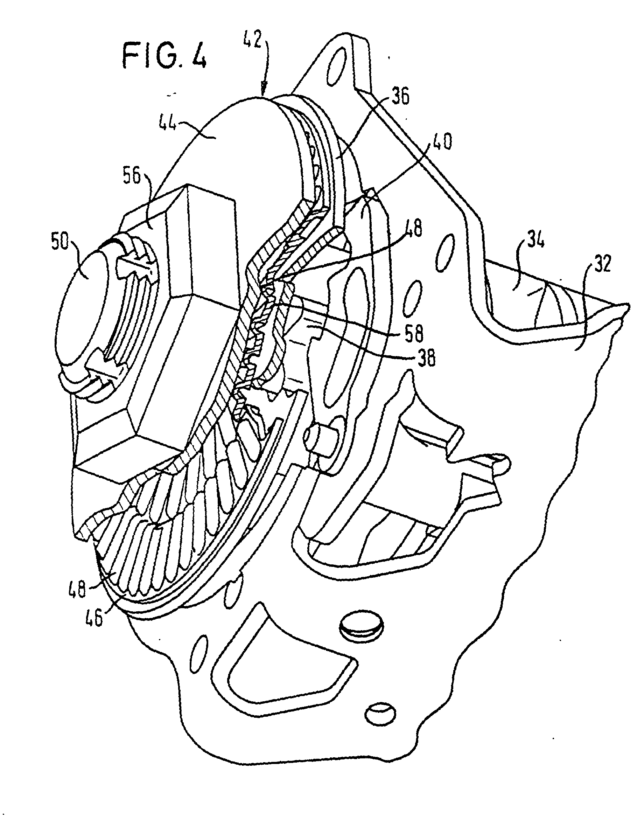

Wie in der Figur 4 zu erkennen ist, wird die Kupplungsplatte 44 mit einer auf die Gurtspulenachse 50 aufgeschraubten Mutter 56 gegen die Federplatte 46 und die Sperrscheibe 36 vorgespannt. Je nachdem, wie groß das durch die Reibkupplung 42 übertragbare Drehmoment sein soll, wird die Mutter 56 mehr oder weniger stark angezogen.

In der Figur 4 ist auch zu erkennen, daß die Ausformungen 48 der Federplatte 46 einen in einer Richtung parallel zu den Kupplungsflächen kreisabschnittsförmigen Querschnitt aufweisen. Die Ausformungen 48 haben dadurch eine gute Federwirkung, und die Reibkupplung 42 kann in zwei Richtungen drehmomentbegrenzend wirken. Die einzelnen Ausformungen 48 der Federplatte 46 sind durch gerade Abschnitte 58 miteinander verbunden. Während die Ausformungen 48 erste Abschnitte der Federplatte 46 bilden, die an der durch die dem Rahmen 32 zugewandten Fläche der Kupplungsplatte 44 gebildeten ersten Kupplungsfläche anliegen, bilden die geraden Abschnitte 58 zweite Abschnitte, die an der zweiten Kupplungsfläche anliegen, die durch die vom dem Rahmen 32 abgewandte Fläche der Sperrscheibe 36 gebildet ist.

Bei einem Fahrzeugaufprall wird die Sperrklinke 40 fahrzeug- oder gurtbandsensitiv in die Sperrverzahnung 38 der Sperrscheibe 36 eingesteuert, so daß die Gurtspule 34 gegenüber dem Rahmen 32 blockiert ist und kein Gurtband mehr von der Gurtspule 34 abgezogen werden kann. Bei einer Vorverlagerung eines Fahrzeuginsassen steigt dadurch die im Gurtband wirkende Kraft an. Aufgrund der im Gurtband wirkenden Kraft muß die Reibkupplung 42 ein Drehmoment übertragen. Überschreitet dieses von der Reibkupplung 42 zu übertragende Drehmoment einen vorbestimmten Wert, wird auch die maximal zwischen den durch die Ausformungen 48 gebildeten ersten Abschnitten und der ersten Kupplungsfläche bzw. maximal zwischen den durch die geraden Abschnitte 58 gebildeten zweiten Abschnitten und der zweiten Kupplungsfläche übertragbare Reibungskraft überschritten, so daß sich die Kupplungsscheibe 44 relativ zu der Sperrscheibe 36 verdrehen kann. Dadurch kann auch erneut Gurtband von der Gurtspule 34 abgezogen werden, so daß auch die Gurtkraft im Gurtband absinkt. Wird das durch die Reibungskupplung 42 maximal übertragbare Drehmoment wieder unterschritten, tritt zwischen der Federplatte 46 und der Sperrscheibe 36 bzw. der Kupplungsscheibe 44 wieder Haftreibung auf, so daß keine relative Verdrehung der Kupplungsscheibe 44 gegenüber der Sperrscheibe 36 mehr möglich ist.

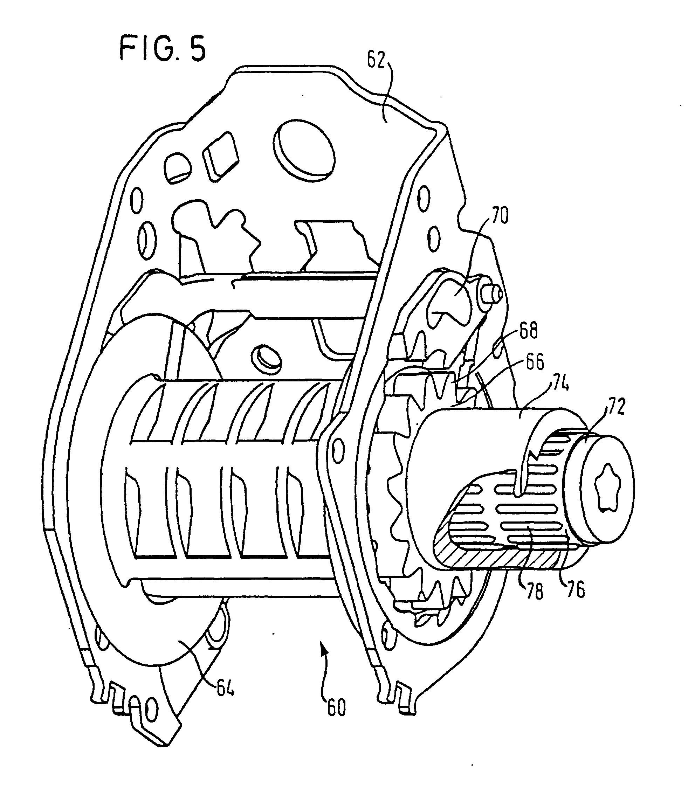

Eine zweite Ausführungsform eines erfindungsgemäßen Gurtaufrollers 60 ist in der Figur 5 dargestellt. In gleicher Weise wie der in den Figuren 3 und 4 dargestellte Gurtaufroller weist der Gurtaufroller 60 einen Rahmen 62, eine Gurtspule 64, eine Sperrscheibe 66 mit Sperrverzahnung 68 und eine in die Sperrverzahnung 68 einsteuerbare Sperrklinke 70 auf. Die Gurtspule 64 weist eine fest mit der Gurtspule 64 verbundene Achse auf, die eine sich über den Rahmen 62 hinaus erstreckende Verlängerung 72 hat. Die Sperrscheibe 66 ist fest mit einem Hohlzylinder 74 versehen, in dem sich die Verlängerung 72 der Gurtspulenachse erstreckt. Ein aus einem Zylinder 76 mit federnden Ausformungen 78 bestehendes Federbauteil ist zwischen die Verlängerung 72 der Gurtspulenachse und den Hohlzylinder 74 der Sperrscheibe 66 eingepreßt. Die in dem Gurtaufroller 60 vorgesehen Reibkupplung zur Drehmomentbegrenzung ist damit durch eine Mantelfläche der Verlängerung 72, den Zylinder 76 mit federnden Ausformungen 78 und die Innenfläche des Hohlzylinders 74 gebildet. Bei der in der Figur 5 gezeigten Anordnung der Reibkupplung ist die Relativgeschwindigkeit zwischen den Kupplungsflächen über die ganzen Kupplungsflächen gleich, so daß das aus dem Zylinder 76 mit den Ausformungen 78 bestehende Federbauteil überall gleichmäßig belastet wird. Der zur Realisierung der Reibkupplung in dem Gurtaufroller 60 erforderliche zusätzliche Bauaufwand ist dabei gering, da lediglich die Gurtspulenachse mit der Verlängerung 72 und die Sperrscheibe 66 mit dem Hohlzylinder 74 versehen werden muß. Außer dem Zylinder 76 als Reibelement sind damit keine gegenüber einem konventionellen Gurtaufroller zusätzlichen Teile erforderlich.

## Patentansprüche

1. Gurtaufroller mit einer in einem Rahmen drehbar gelagerten Gurtspule (34; 64) und einem Blockiermechanismus (36, 38, 40; 66, 68, 70) für die Gurtspule (34; 64) mit wenigstens einer mit der Gurtspule (34; 64) verbundenen Sperrscheibe (36; 66) und einem im Kraftflussweg zwischen der Gurtspule (34; 64) und der Sperrscheibe (36; 66) angeordneten Drehmomentbegrenzungselement, **dadurch gekennzeichnet, daß** das Drehmomentbegrenzungselement als Reibkupplung mit zwei einander gegenüberliegenden Kupplungsflächen (10, 12) und einem zwischen den Kupplungsflächen (10, 12) angeordneten Reibelement ausgebildet ist, wobei das Reibelement als flächiges Federbauteil (14; 22; 46; 76) mit Ausformungen (24; 48; 78) ausgebildet ist, welches eine elastische Anpreßkraft zwischen den Kupplungsflächen erzeugt, wobei die Ausformungen (24; 48; 78) wenigstens teilweise an einer der Kupplungsflächen (10) anliegen, wobei die erste Kupplungsfläche mit der Gurtspule (34) drehfest verbunden ist und wobei die zweite Kupplungsfläche drehfest mit der Sperrscheibe (36) verbunden ist.

2. Gurtaufroller nach Anspruch 1, **dadurch gekennzeichnet, dass** die erste Kupplungsfläche auf einer mit der Gurtspule (34) drehfest verbundenen ersten Kupplungsplatte (44) und die zweite Kupplungsfläche auf einer drehfest mit der Sperrscheibe (36) verbundenen zweiten Kupplungsplatte vorgesehen ist und zwischen den Kupplungsflächen eine Platte (46) mit federnden Ausformungen (48) angeordnet ist.

3. Gurtaufroller nach Anspruch 1, **dadurch gekennzeichnet, dass** die erste Kupplungsfläche auf einer mit der Gurtspule (64) drehfest verbundenen Zylinderfläche und die zweite Kupplungsfläche auf einer drehfest mit der Sperrscheibe (66) verbundenen Zylinderfläche vorgesehen und zwischen den Kupplungsflächen ein Zylinder (76) mit federnden Ausformungen (78) angeordnet ist.

4. Gurtaufroller nach Anspruch 3, **dadurch gekennzeichnet, dass** die erste Kupplungsfläche durch eine Mantelfläche einer Verlängerung (72) einer Gurtspulenachse und die zweite Kupplungsfläche durch eine Innenfläche eines mit der Sperrscheibe (66) verbundenen Hohlzylinders (74) gebildet ist.

5. Gurtaufroller nach einem der vorhergehenden Ansprüche, **dadurch gekennzeichnet, dass** die Ausformungen (24; 48; 78) in einer Richtung parallel zu den Kupplungsflächen (10, 12) einen kreisabschnittsförmigen Querschnitt aufweisen.

6. Gurtaufroller nach einem der vorhergehenden Ansprüche, **dadurch gekennzeichnet, dass** das Federbauteil (14) als wellenförmiges Band ausgebildet ist.

## Claims

1. A belt retractor comprising a belt spool (34; 64) rotatably mounted in a frame, a locking mechanism (36, 38, 40; 66, 68, 70) for the belt spool (34; 64) with at least one locking disc (36; 66) connected to the belt spool (34; 64), and a torque limiting member arranged in the force flow path between the belt spool (34; 64) and the locking disc (36; 66), **characterized in that** the torque limiting member is constructed as a friction clutch having two clutch faces (10, 12) lying opposite each other and a friction member arranged between the clutch faces (10, 12), the friction member being constructed as a flat spring part (14; 22; 46; 76) having shaped portions (24; 48; 78) and producing an elastic contact pressure between the clutch faces, the shaped portions (24; 48; 78) at least partially contacting one of the clutch faces (10), the first clutch face being connected to the belt spool (34) for joint rotation therewith, and the second clutch face being connected to the locking disc (36) for joint rotation therewith.

2. The belt retractor according to claim 1, **characterized in that** the first clutch face is provided on a first clutch plate (44) connected to the belt spool (34) for joint rotation therewith and the second clutch face is provided on a second clutch plate connected to the locking disc (36) for joint rotation therewith, and a plate (46) having elastic shaped portions (48) is arranged between the clutch faces.

3. The belt retractor according to claim 1, **characterized in that** the first clutch face is provided on a cylinder face connected to the belt spool (64) for joint rotation therewith and the second clutch face is provided on a cylinder face connected to the locking disc (66) for joint rotation therewith, and a cylinder (76) having elastic shaped portions (78) is arranged between the clutch faces.

4. The belt retractor according to claim 3, **characterized in that** the first clutch face is formed by a covering face of an extension (72) of a belt spool axle and the second clutch face is formed by an inner face of a hollow cylinder (74) connected to the locking disc (66).

5. The belt retractor according to any of the preceding claims, **characterized in that** the shaped portions (24; 48; 78) have a cross-section in the shape of a circular segment in a direction parallel to the clutch faces (10, 12).

6. The belt retractor according to any of the preceding claims, **characterized in that** the spring part (14) is constructed as a corrugated band.

## Revendications

1. Enrouleur de ceinture comportant une bobine de ceinture (34 ; 64) montée rotative dans un cadre, et un mécanisme de blocage (36, 38, 40 ; 66, 68, 70) pour la bobine de ceinture (34 ; 64) avec au moins un disque de blocage (36 ; 66) relié à la bobine de ceinture (34 ; 64) et un élément de limitation de couple de rotation agencé dans la trajectoire de flux de force entre la bobine de ceinture (34 ; 64) et le disque de blocage (36 ; 66), **caractérisé en ce que** l'élément de limitation de couple de rotation est réalisé sous forme d'accouplement à friction avec deux surfaces d'accouplement (10, 12) opposées l'une à l'autre et un élément de friction agencé entre les surfaces d'accouplement (10, 12), l'élément de friction étant réalisé sous forme de composant ressort plat (14 ; 22 ; 46 ; 76) avec des configurations (24 ; 48; 78), lequel produit une force de pression élastique entre les surfaces d'accouplement, les configurations (24 ; 48 ; 78) reposant sur au moins une des surfaces d'accouplement (10), la première surface d'accouplement étant reliée solidaire en rotation avec la bobine de ceinture (34), et la deuxième surface d'accouplement étant reliée solidaire en rotation avec le disque de blocage (36).

2. Enrouleur de ceinture selon la revendication 1, **caractérisé en ce que** la première surface d'accouplement est prévue sur une première plaque d'accouplement (44) reliée solidaire en rotation avec la bobine de ceinture (34), et la deuxième surface d'accouplement est prévue sur une deuxième plaque d'accouplement reliée solidaire en rotation avec le disque de blocage (36) et **en ce qu'**une plaque (46) avec configurations élastiques (48) est agencée entre les surfaces d'accouplement.

3. Enrouleur de ceinture selon la revendication 1, **caractérisé en ce que** la première surface d'accouplement est prévue sur une plaque cylindrique reliée solidaire en rotation avec la bobine de ceinture (64), et la deuxième surface d'accouplement est prévue sur une plaque cylindrique reliée solidaire en rotation avec le disque de blocage (66) et **en ce qu'**un cylindre (76) avec configurations élastiques (78) est agencé entre les surfaces d'accouplement.

4. Enrouleur de ceinture selon la revendication 3, **caractérisé en ce que** la première surface d'accouplement est formée par une surface enveloppe d'un prolongement (72) d'un axe de bobine de ceinture et la deuxième surface d'accouplement est formée par une surface intérieure d'un cylindre creux (74) relié au disque de blocage (66).

5. Enrouleur de ceinture selon l'une des revendications précédentes, **caractérisé en ce que** les configurations (24 ; 48 ; 78) présentent une section transversale en forme de segment de cercle dans une direction parallèle aux surfaces d'accouplement (10, 12).

6. Enrouleur de ceinture selon l'une des revendications précédentes, **caractérisé en ce que** le composant ressort (14) est réalisée sous forme de ruban ondulé.
